# EUROPÄISCHE PATENTSCHRIFT

(11) **EP 3 551 902 B1**
(45) Veröffentlichungstag und Bekanntmachung des Hinweises auf die Patenterteilung: **14.10.2020**
(21) Anmeldenummer: 16806155.4
(22) Anmeldetag: 07.12.2016
(51) Int. Cl.: F16D 48/06, F16D 13/52, F16D 13/64

(54) **VERFAHREN ZUM ANSTEUERN EINER LAMELLENKUPPLUNG**
METHOD FOR ACTUATING A MULTI-PLATE CLUTCH
PROCÉDÉ POUR COMMANDER UN EMBRAYAGE MULTIDISQUES

(43) Veröffentlichungstag der Anmeldung: 16.10.2019
(73) Patentinhaber: GKN Automotive Ltd., West Midlands, B37 7YE (GB)
(72) Erfinder: RUITERS, Volker Rene, 53721 Siegburg (DE); LANGHANKI, Andreas, 47259 Duisburg (DE); BRÜNING, Rainer, 48431 Rheine (DE)
(74) Vertreter: karo IP
(86) Internationale Anmeldenummer: PCT/EP2016/080054
(87) Internationale Veröffentlichungsnummer: WO 2018/103833

(56) Entgegenhaltungen:
- EP-A1- 2 620 666
- DE-B3-102014 007 090
- US-A- 5 133 326
- US-B1- 6 314 342

## Beschreibung

Die vorliegende Erfindung betrifft ein Verfahren zum Ansteuern einer Lamellenkupplung, insbesondere für eine Lamellenkupplung, die an einer Seitenwelle eines Kraftfahrzeuges angeordnet ist, so dass durch das Schließen der Lamellenkupplung nur ein Rad des Kraftfahrzeuges mit einer Antriebseinheit des Kraftfahrzeuges drehmomentübertragend verbunden wird.

Insbesondere ist die Lamellenkupplung Bestandteil einer als ETM (Electronic Torque Manager) oder EMCD (Electro-Magnetic Control Device) bekannten, elektromotorisch aktiv geregelten Kupplung für zuschaltbare oder permanente Allradantriebe, die auch als aktive Achssperre einsetzbar ist.

Bevorzugt ist die Lamellenkupplung Bestandteil einer hydraulisch betätigbaren Kupplung (HCA- hydraulic clutch actuator).

Derartige Lamellenkupplungen sind bekannt. Dabei sind Außenlamellen mit einem Lamellenaußenträger und Innenlamellen mit einem Lamelleninnenträger drehfest verbunden. Jeder Lamellenträger ist mit einer Komponente der folgenden Gruppe von Antriebswelle und Abtriebswelle drehfest verbunden. Infolge einer Beaufschlagung mit einer, in einer axialen Richtung wirkenden Schließkraft werden die Lamellen miteinander in Kontakt gebracht, so dass ein Drehmoment von der Antriebswelle über die Kupplung auf die Abtriebswelle übertragen werden kann.

Aus US-A-5 133 326 ist ein Verfahren zum Ansteuern einer Lamellenkupplung in einem Fahrzeug bekannt, wobei bei einer Drehmomentanforderung und einem daraufhin erfolgendem Schließen der Lamellenkupplung die Schließkraft bis zum Ende der vorbestimmten Schlupfzeit reduziert wird.

Es hat sich nun bei der Ansteuerung von Lamellenkupplungen gezeigt, dass es bei einem schnellen Aufbau eines zu übertragenden Drehmoments in der Lamellenkupplung zu Überschwingern im Drehmoment kommen kann. Diese Überschwinger (es werden über die Lamellenkupplung also Drehmomente übertragen, die das Soll-Drehmoment teilweise deutlich übersteigen) können einerseits die Lamellenkupplung selbst aber auch andere Komponenten des Kraftfahrzeuges überlasten und beschädigen, ggf. zerstören.

Hiervon ausgehend ist es Aufgabe der vorliegenden Erfindung, die im Zusammenhang mit dem Stand der Technik geschilderten Probleme wenigstens teilweise zu lösen. Es soll insbesondere ein Verfahren zum Ansteuern einer Lamellenkupplung vorgeschlagen werden, durch das Beschädigungen im Antriebstrang infolge der Übertragung von zu hohen Drehmomenten verhindert werden.

Hierzu trägt ein Verfahren gemäß den Merkmalen des Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zum Ansteuern einer Lamellenkupplung vorgeschlagen, die zur schaltbaren Übertragung von Drehmomenten zwischen einer Antriebswelle und einer Abtriebswelle angeordnet ist. Bei einer Drehmomentanforderung und (vor bzw. während) einem daraufhin erfolgendem Schließen der Lamellenkupplung werden zumindest die folgenden Schritte durchgeführt:
a) Bestimmen einer, in einer axialen Richtung wirkenden Soll-Schließkraft der Lamellenkupplung zur Übertragung eines Soll-Drehmoments auf die Abtriebswelle;
b) Bestimmen und Einstellen einer Grenz-Schließkraft, die kleiner ist als die Soll-Schließkraft und
c) zeitversetztes Einstellen der Soll-Schließkraft;
wobei durch die Begrenzung der Soll-Schließkraft auf die Grenz-Schließkraft eine Übertragung eines Ist-Drehmoments realisiert wird, so dass ein bei dem Schließen der Lamellenkupplung übertragenes, maximales Ist-Drehmoment ein zu übertragendes Soll-Drehmoment um höchstens 5 % übersteigt.

Das Soll-Drehmoment stellt das Drehmoment dar, das durch die Lamellenkupplung auf eine Abtriebswelle übertragen werden soll. Diese Anforderung wird über eine Steuerungseinheit an die Lamellenkupplung weitergeleitet, so dass ein zumindest teilweises Schließen der Lamellenkupplung erfolgt. Insbesondere ist das Soll-Drehmoment kleiner als ein Drehmoment, das von der Antriebswelle bereitgestellt wird.

Die Lamellenkupplung weist insbesondere eine Drehachse auf und ist koaxial zu Antriebswelle und Abtriebswelle angeordnet. Die Lamellen der Lamellenkupplung erstrecken sich in Umfangsrichtung um die Drehachse und sind drehfest mit Lamellenträgern verbunden.

Zur Übertragung eines vorgegebenen Soll-Drehmoments wird üblicherweise eine Soll-Schließkraft an der Lamellenkupplung eingestellt, durch die die Lamellen gegeneinander gepresst werden. Es hat sich nun gezeigt, dass gerade bei einem schnellen Aufbau eines Drehmoments Überschwinger auftreten, die das zu übertragende Soll-Drehmoment deutlich übersteigen. Für diese Überschwinger sind verschiedene Ursachen identifiziert worden, die im Folgenden näher beschrieben werden. Zur Vermeidung bzw. Begrenzung dieser Überschwinger wird nun vorgeschlagen, dass die Schließkraft nicht sofort auf die Soll-Schließkraft erhöht wird, sondern zunächst nur auf eine Grenz-Schließkraft, die insbesondere zumindest 5 %, insbesondere zumindest 10 %, bevorzugt sogar mindestens 20 % kleiner ist als die Soll-Schließkraft.

Die Einstellung der Grenz-Schließkraft wird insbesondere für ca. 0,02 bis 0,2 Sekunden aufrechterhalten. Erst danach (also zeitversetzt) wird die für die Übertragung des Soll-Drehmoments erforderliche Soll-Schließkraft eingestellt.

Dabei sind die angegebenen Prozentwerte insbesondere von dem System abhängig, in dem die Lamellenkupplung eingebaut ist. Dieses System umfasst insbesondere die Antriebseinheit und die zwischen der Antriebseinheit und der Lamellenkupplung vorgesehenen Komponenten, die zur Übertragung von Drehmomenten eingesetzt werden. Die Grenz-Schließkraft ergibt sich insbesondere aus den auftretenden Überschwingern, wenn direkt auf die Soll-Schließkraft geregelt werden würde. Dabei spielen insbesondere auch mechanische Verformungen, Systemreibungen oder ähnliches eine Rolle. Auch die zeitliche Dauer ist insbesondere abhängig von dem System. Dabei kommt es z. B. darauf an, wie lange es dauert, bis das System in eine gleichmäßige Gleitphase übergeht und die Überschwinger abgebaut sind. Werden die genannten Grenzen überschritten, können z. B. Schädigungen von Bauteilen auftreten oder es werden für einen Kunden spürbare Reaktionen (z. B. "Rucken" oder Fahrzeugbewegungen wie z. B. gieren) erzeugt.

Beim Schließen der Lamellenkupplung tritt demnach ein maximales Ist-Drehmoment auf, das das zu übertragende Soll-Drehmoment um höchstens 5 % übersteigt. Das tatsächliche Ist-Drehmoment kann auch kleiner als das zu übertragende Soll-Drehmoment sein. Das Ist-Drehmoment kann hierbei so eingestellt werden, dass es im Bereich von 80 % bis 105 % des zu übertragenden Soll-Drehmoments liegt.

Insbesondere ist die Lamellenkupplung zur Übertragung von Drehmomenten an einer Seitenwelle eines Kraftfahrzeuges angeordnet, so dass durch das Schließen der Lamellenkupplung nur ein Rad des Kraftfahrzeuges mit einer Antriebseinheit des Kraftfahrzeuges drehmomentübertragend verbunden wird. Die Lamellenkupplung ist also insbesondere keine Kupplung eines Kraftfahrzeuges, die zwischen der Antriebseinheit und einem schaltbaren Getriebe des Kraftfahrzeuges angeordnet ist. Insbesondere derartige, an den Seitenwellen angeordnete Lamellenkupplungen müssen (oft) sprunghafte Änderungen eines zu übertragenden Soll-Drehmoments verarbeiten, so dass hier bislang die eingangs genannten Probleme stärker auftraten.

Insbesondere stellt die Drehmomentanforderung also eine sprunghafte Änderung eines Soll-Drehmoments dar. Bei einer sprunghaften Änderung wird ein Soll-Drehmoment innerhalb einer kurzen Zeit auf einen wesentlich höheren Wert gesteigert, z. B. wird das Soll-Drehmoment innerhalb von höchstens 0,5 Sekunden um mindestens den Faktor 2 bis 10 gesteigert, bevorzugt um einen Wert von mindestens 300 Nm [Newtonmeter].

Insbesondere stellt das mit der Drehmomentanforderung angeforderte Soll-Drehmoment ein für die vorliegende Lamellenkupplung definiertes Nenndrehmoment dar. Insbesondere erfolgt die Änderung des Soll-Drehmoments auf einen Wert, der mindestens 90 %, bevorzugt mindestens 95 %, besonders bevorzugt mindestens 99 % des Nenn-Drehmoments der Lamellenkupplung beträgt. Dabei ist das Nenn-Drehmoment das Drehmoment, für dessen Übertragung die Lamellenkupplung ausgelegt wurde, d. h. bis zu dieser Höhe eines Drehmoments können Drehmomente übertragen werden, wobei eine geplante Lebensdauer der Lamellenkupplung erreicht werden sollte.

Gemäß einer bevorzugten Ausgestaltung wird die Begrenzung auf eine Grenz-Schließkraft während des Schließens der Lamellenkupplung nach dem Übergang von einer zwischen den Lamellen vorliegenden Haftreibungsbedingung auf eine Gleitreibungsbedingung aufgehoben. D. h. insbesondere, dass danach die Soll-Schließkraft eingestellt wird.

Das oben beschriebene Problem der Überschwinger des zu übertragenden Drehmoments zeigt sich insbesondere bei besonderen Anfahrsituationen des Kraftfahrzeuges. Z. B. kommt es bei so genannten Knallstarts, Mue-Sprung- und Mue-Split-Anfahrten zu Drehmoment-Überschwingern (das Soll-Drehmoment wird bis zu 30 % übertroffen und das über längere Zeit), die das System (also z. B. die Lamellenkupplung aber auch andere Komponenten des Kraftfahrzeuges) überlasten und zerstören können. Bisher wurde das Kupplungsübertragungsverhalten noch nicht vollständig berücksichtigt.

Insbesondere ist bei einer Mue-Split-Anfahrt der Fahrbahnreibwert zwischen links und rechts (also einem Rad auf der linken Seite des Kraftfahrzeugs und einem Rad auf der rechten Seite des Kraftfahrzeugs) unterschiedlich. Meistens hat man auf einer Seite Low Mue (geringer Reibwert, z.B. Eis), und auf der anderen Seite High Mue (hoher Reibwert, z. B. Asphalt). Bei der Anfahrt wird dabei das Drehmoment über die Lamellenkupplung hin zu dem Rad bzw. auf die Seite des Kraftfahrzeuges verteilt, bei dem High Mue vorliegt, so dass eine bestmöglich Beschleunigung des Kraftfahrzeuges erreicht werden kann.

Insbesondere ist eine Mue-Sprung-Anfahrt ähnlich, wobei hier ein unterschiedlicher Reibwert nicht auf einer linken Seite und rechten Seite vorliegt, sondern zwischen einer Vorderachse und einer Hinterachse.

Ein Knallstart beschreibt insbesondere ein Anfahren mit maximaler Beschleunigung. Dabei wird eine Fahrzeugkupplung getreten (also ein Kupplungspedal durch den Fahrer betätigt) und ein erster Gang eingelegt. Der Fahrer gibt dann Vollgas und löst schlagartig die Fahrzeugkupplung (der das Kupplungspedal betätigende Fuß des Fahrers wird zur Seite weggezogen). Bei dieser Anfahrart wird schlagartig Energie in den Antriebsstrang angebracht, so dass gerade hier Überschwinger auftreten und Komponenten des Kraftfahrzeugs geschädigt werden können.

Es wurde nun herausgefunden, dass beim Aufziehen des Antriebsstrangs, das bei den verschiedenen Systemen und Antriebsstrangkonfigurationen stark variieren kann, der Reibwert und/oder die Schließkraft der (Lamellen-)Kupplung höher ist, als unter Drehzahldifferenz. Dabei kann man ein Verhalten annehmen, bzw. abbilden, das den Reibwert abhängig von einer Drehzahldifferenz variiert. Dabei ist der Reibwert hier nicht klassisch als einzig wirksamer Reibwert des Kupplungsbelages zu sehen, sondern bezieht auch andere Effekte mit ein.

Es wird also zum Beispiel (indirekt) mit berücksichtigt, dass unter fast Null Drehzahldifferenz die Schließkraft in dem Lamellenpaket höher ist, da die Reibverluste an den Mitnahmen der Lamellen nahezu wegfallen. So können auch Verformungen von Bauteilen, die zum Ansteigen der Schließkraft oder zum Ansteigen des Drehmoments führen, einfach berücksichtigt werden. Der Ansatz erlaubt dabei durch eine einfache Identifizierung die Berücksichtigung vieler Phänomene, die einen ähnlichen und zusammenwirkenden Effekt (Drehmomentüberschwinger) haben. Der Ansatz geht somit über die einfache Annahme eines Stick-Slip- oder Stribeck-Reibung Verhaltens hinaus, da dieses Verhalten nur Effekte auf der Reibfläche berücksichtigt.

Wird nun in dieser Situation die Schließkraft der Lamellenkupplung (z. B. Position im ETM, Druck im HCA, oder mag. Feld im EMCD) reduziert, kann es nicht zu den Drehmomentüberhöhungen beim Übergang von der Haft- in die Gleitreibung kommen. Nach Übergang in die Gleitreibung kann die Reduzierung weggenommen werden und führt zu dem Verhalten wie im Normalfall.

Gemäß einer weiteren, bevorzugten Ausgestaltung wird die Lamellenkupplung hydraulisch aktuiert, wobei die in der axialen Richtung wirkende Schließkraft durch einen Kupplungsdruck in einem Kupplungsdruckraum erzeugt wird, wobei der Kupplungsdruckraum über ein Ventil mit einer Systemleitung verbunden ist, die über eine Pumpe mit einem Hydraulikfluid befüllbar ist. Bei einer Drehmomentanforderung erfolgt eine Ansteuerung des Ventils zunächst mit einem (elektrischen) Grenz-Ventilstrom (in Ampere) zur Öffnung des (elektrisch betätigten) Ventils, wobei der (elektrische) Ventilstrom während des Schließens der Lamellenkupplung dann bis zu einem (elektrischem) Soll-Ventilstrom erhöht wird.

Beispielsweise wirkt der Kupplungsdruck auf einen Kolben in dem Kupplungsdruckraum, der durch den Kupplungsdruck in der axialen Richtung verlagert wird. Durch den Kolben wird die Schließkraft auf die Lamellen übertragen.

Insbesondere wird während des Schließens der Lamellenkupplung durch das gesteuerte Öffnen des Ventils sichergestellt, dass der Kupplungsdruck einen Soll-Kupplungsdruck um höchstens 5 % übersteigt.

Bei einer Drehmomentanforderung und (vor bzw. während) einem daraufhin erfolgendem Schließen der Lamellenkupplung werden also zumindest die folgenden Schritte durchgeführt:
a) Bestimmen einer, in einer axialen Richtung wirkenden Soll-Schließkraft der Lamellenkupplung zur Übertragung eines Soll-Drehmoments auf die Abtriebswelle und Bestimmen eines Soll-Ventilstroms zur Erzeugung der Soll-Schließkraft;
b) Bestimmen und Einstellen einer Grenz-Schließkraft, die kleiner ist als die Soll-Schließkraft durch das Einstellen eines Grenz-Ventilstroms zur Öffnung des Ventils, und
c) zeitversetztes Einstellen der Soll-Schließkraft durch Erhöhen des Ventilstroms auf den Soll-Ventilstrom.

Bei hydraulischen Systemen hat sich gezeigt, dass die DrehmomentÜberschwinger insbesondere auf eine Trägheit des Ventils zurückzuführen sind. Infolge der Trägheit wird aber auch die Stellgenauigkeit der Lamellenkupplung beeinträchtigt. Dieser Umstand ist vor allem dann kritisch, sobald ein Soll-Drehmoment, das mindestens 90 %, bevorzugt mindestens 95 %, besonders bevorzugt mindestens 99 % des Nenn-Drehmoments der Lamellenkupplung beträgt, angefordert wird. Gerade dann kann das Nenn-Drehmoment deutlich überschritten werden und somit eine Beschädigung oder Zerstörung der Lamellenkupplung oder weiterer Komponenten des Kraftfahrzeuges erfolgen.

Während einer stationären oder sehr langsamen Anforderung eines Soll-Drehmoments ist der von der Pumpe in der Systemleitung aufgebaute Systemdruck insbesondere üblicherweise höher als der Kupplungsdruck im Kupplungsdruckraum. In diesem Fall kann das Ventil wie gewünscht arbeiten.

Bei einer Drehmomentanforderung, die eine schnelle Änderung oder eine sprunghafte Änderung eines Soll-Drehmoments erforderlich macht, wird hydraulisches Volumen (z. B. in dem Kupplungsdruckraum) benötigt um die Lamellenkupplung zu komprimieren. Dieses Volumen kann in einigen Fällen nicht schnell genug von der Pumpe bereitgestellt werden. Daher bricht der Druck des Hydraulikfluids in der Systemleitung auf das Niveau des Kupplungsdrucks ein, sobald das Ventil dem System (bzw. der Systemleitung) zu schnell zu viel Volumen entzieht. Als Resultat geht z. B. ein Ventilschieber des Ventils in eine Anschlagsposition, da das Ventil nicht normal regeln kann. Sobald dann durch die Pumpe der Druck in der Systemleitung (Systemdruck) und der Kupplungsdruck (Soll-Kupplungsdruck) auf das Zielniveau (Soll-Kupplungsdruck) erhöht wird, braucht das Ventil eine gewisse Zeit (bedingt durch Trägheit, Reibung, etc.), um den Ventilschieber aus der Anschlagsposition wieder in eine Regelposition zu bringen. Damit wird in der Lamellenkupplung zumindest vorübergehend nicht der gewünschte Soll-Kupplungsdruck, sondern der etwas höhere Druck der Systemleitung eingestellt. Dieser höhere Druck der Systemleitung ist höher als ein Soll-Kupplungsdruck, so dass eine Schließkraft der Lamellenkupplung höher ist als die Soll-Schließkraft und ein höheres Drehmoment als das Soll-Drehmoment übertragen wird.

Um diesen Effekt zu verhindern, kann während der Füllphase ein geringerer Kupplungsdruck vom Ventil gefordert werden, als final gewünscht ist. Der geringere Kupplungsdruck wird am Ventil über einen Grenz-Ventilstrom eingestellt, wobei der Grenz-Ventilstrom insbesondere 5 %, bevorzugt 10 %, besonders bevorzugt sogar 20 % kleiner ist als ein Soll-Ventilstrom.

Die Einstellung des Grenz-Ventilstroms wird insbesondere für ca. 0,02 bis 0,2 Sekunden aufrechterhalten. Erst danach (also zeitversetzt) wird die für die Übertragung des Soll-Drehmoments erforderliche Soll-Schließkraft durch Erhöhung des Ventilstroms auf den Soll-Ventilstrom eingestellt.

Dabei sind die angegebenen Prozentwerte insbesondere von dem System abhängig, in dem die Lamellenkupplung eingebaut ist. Dieses System umfast insbesondere die Antriebseinheit und die zwischen der Antriebseinheit und der Lamellenkupplung vorgesehenen Komponenten, die zur Übertragung von Drehmomenten eingesetzt werden. Der Grenz-Ventilstrom ergibt sich insbesondere aus den auftretenden Überschwingern, wenn direkt auf den Soll-Ventilstrom (bzw. auf den Soll-Kupplungsdruck) geregelt werden würde. Dabei spielen insbesondere auch mechanische Verformungen, Systemreibungen oder ähnliches eine Rolle. Auch die zeitliche Dauer ist insbesondere abhängig von dem System. Dabei kommt es z. B. darauf an, wie lange es dauert, bis das System in eine gleichmäßige Gleitphase übergeht und die Überschwinger abgebaut sind. Werden die genannten Grenzen überschritten, können z. B. Schädigungen von Bauteilen auftreten oder es werden für einen Kunden spürbare Reaktionen (z. B. "Rucken" oder Fahrzeugbewegungen wie z. B. gieren) erzeugt.

Sobald der reduzierte Kupplungsdruck erreicht ist, begibt sich der Ventilschieber in die Regelposition. Sobald dies geschehen ist, wird der geforderte Kupplungsdruck durch eine Regelung des Ventils in dem Maß auf das Zielniveau erhöht, bei dem die Pumpe noch in der Lage ist, den Druck in der Systemleitung aufrecht zuerhalten. Somit können die Überschwinger im Kupplungsdruck bzw. im übertragenen Drehmoment verhindert werden.

Falls keine Drucksensoren für den Druck in der Systemleitung oder im Kupplungsdruckraum vorliegen, bzw. entsprechende Messwerte liefern können, müssen diese Drücke geschätzt werden. Auf Basis der aktuell vorliegenden (ggf. geschätzten) Drücke ist der Zeitpunkt zu ermitteln, wann der Ventilschieber sich wieder in Regelposition begibt. Dieser Prozess sollte aber, wie die gesamte Füllphase, nicht zu viel Zeit in Anspruch nehmen. Eine Anforderung an die Lamellenkupplung ist insbesondere, dass zum Aufbau eines zu übertragenen Soll-Drehmoment eine möglichst kurze Zeit vergeht.

Eine Voraussetzung für die Umsetzung dieses Verfahrens ist weiter insbesondere, dass die Bestimmung/Schätzung des Drucks in der Systemleitung sehr präzise sein sollte. Dieser Druck in der Systemleitung kann insbesondere aus dem Motorstrom, der die Pumpe antreibt, abgeleitet werden. Allerdings ist zu berücksichtigen, dass der gemessene Strom nicht direkt proportional zu dem aufgebauten Druck in der Systemleitung ist, da Reibung und betriebspunktabhängige Wirkungsgradverluste in der Pumpe und in dem Motor sowie Fehler in der Motorstrommessung den Zusammenhang beeinflussen. Diese Einflüsse sollten berücksichtigt werden und können insbesondere durch ein zumindest teilweises Einlernen des Systems bestimmt werden.

Es wird weiter ein Kraftfahrzeug vorgeschlagen, zumindest aufweisend eine Antriebseinheit und eine Lamellenkupplung, die zur Übertragung von Drehmomenten an einer Seitenwelle des Kraftfahrzeuges angeordnet sind, so dass durch das Schließen der Lamellenkupplung nur ein Rad des Kraftfahrzeuges mit der Antriebseinheit des Kraftfahrzeuges drehmomentübertragend verbindbar ist, wobei die Lamellenkupplung mit dem hier beschriebenen Verfahren angesteuert wird.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Kraftfahrzeug mit einer Lamellenkupplung zum Antrieb eines Rades des Kraftfahrzeugs;
- Fig. 2:: eine Anordnung einer Lamellenkupplung an einer Seitenwelle, wobei die Lamellenkupplung hydraulisch aktuiert ist;
- Fig. 3:: ein Drehmoment - Zeit Diagramm; und
- Fig. 4:: ein Schließkraft/Ventilstrom/Drehmoment - Zeit Diagramm.

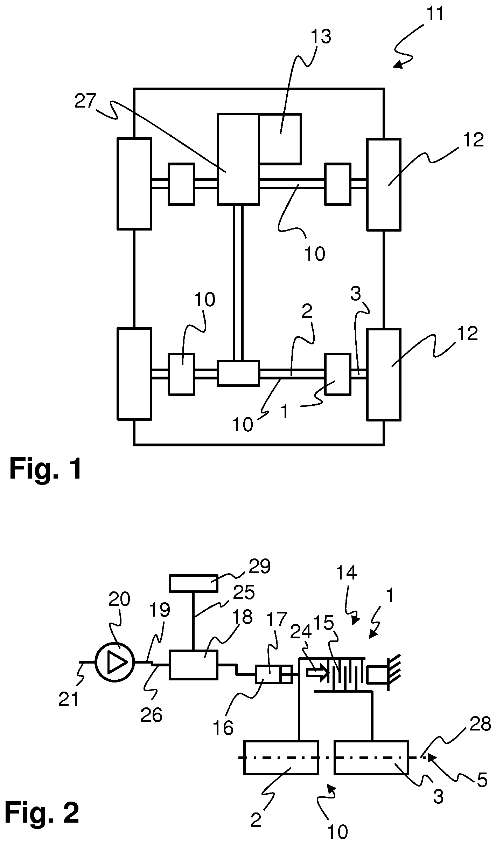

Fig. 1 zeigt ein Kraftfahrzeug 11 mit einer Antriebseinheit 13 und einer Lamellenkupplung 1, die zur Übertragung von Drehmomenten an einer Seitenwelle 10 des Kraftfahrzeuges 11 angeordnet ist, so dass durch das Schließen der Lamellenkupplung 1 nur ein Rad 12 des Kraftfahrzeuges 11 mit der Antriebseinheit 13 des Kraftfahrzeuges 11 drehmomentübertragend verbindbar ist. Die Antriebseinheit 13 ist über ein Getriebe 27 mit den Seitenwellen 10 verbunden. Die Seitenwelle 10 umfasst eine Antriebswelle 2 sowie eine Abtriebswelle 3, die über die Lamellenkupplung 1 miteinander drehmomentübertragend verbindbar sind.

Fig. 2 zeigt eine Anordnung einer Lamellenkupplung 1 an einer Seitenwelle 10, wobei die Lamellenkupplung 1 hydraulisch aktuiert ist. Bei der Lamellenkupplung 1 sind (Außen-)Lamellen 15 mit einem Lamellenaußenträger und (Innen-)Lamellen 15 mit einem Lamelleninnenträger drehfest verbunden. Jeder Lamellenträger ist mit einer Komponente der Gruppe von Antriebswelle 2 und Abtriebswelle 3 drehfest verbunden. Die Lamellenkupplung 1 weist eine Drehachse 28 auf und ist koaxial zu Antriebswelle 2 und Abtriebswelle 3 angeordnet. Die Lamellen 15 der Lamellenkupplung 1 erstrecken sich in Umfangsrichtung um die Drehachse 28 und sind drehfest mit Lamellenträgern verbunden. Infolge einer Beaufschlagung mit einer, in einer axialen Richtung 5 wirkenden Schließkraft 24 werden die Lamellen 15 miteinander in Kontakt gebracht, so dass ein Drehmoment 30 von der Antriebswelle 2 über die Lamellenkupplung 1 auf die Abtriebswelle 3 übertragen werden kann.

Hier wird die Lamellenkupplung 1 hydraulisch aktuiert, wobei die in der axialen Richtung 5 wirkende Schließkraft 24 durch einen Kupplungsdruck 16 in einem Kupplungsdruckraum 17 erzeugt wird, wobei der Kupplungsdruckraum 17 über ein Ventil 18 mit einer Systemleitung 19 verbunden ist, die über eine Pumpe 20 mit einem Hydraulikfluid 21 befüllbar ist. Bei einer Drehmomentanforderung 4 erfolgt eine Ansteuerung des Ventils 18 über eine Steuerungseinheit 29 mit einem (elektrischen) Ventilstrom 25 zur Öffnung des (elektrisch betätigten) Ventils 18.

Der Kupplungsdruck 16 wirkt auf einen Kolben in dem Kupplungsdruckraum 17, der durch den Kupplungsdruck 16 in der axialen Richtung 5 verlagert wird. Durch den Kolben wird die Schließkraft 24 auf die Lamellen 15 übertragen.

Während einer stationären oder sehr langsamen Anforderung eines Soll-Drehmoments 9 ist der von der Pumpe 20 in der Systemleitung 19 aufgebaute Systemdruck üblicherweise höher als der Kupplungsdruck 16 im Kupplungsdruckraum 17. In diesem Fall kann das Ventil 18 wie gewünscht arbeiten. Bei einer Drehmomentanforderung 4, die eine schnelle Änderung oder eine sprunghafte Änderung eines Soll-Drehmoments 9 erforderlich macht, wird hydraulisches Volumen (z. B. in dem Kupplungsdruckraum 17) benötigt um die Lamellenkupplung 1 zu komprimieren. Dieses Volumen kann in einigen Fällen nicht schnell genug von der Pumpe 20 bereitgestellt werden. Daher bricht der Druck des Hydraulikfluids 21 in der Systemleitung 19 auf das Niveau des Kupplungsdrucks 16 ein, sobald das Ventil 18 dem System (bzw. der Systemleitung 19) zu schnell zu viel Volumen entzieht. Als Resultat geht z. B. ein Ventilschieber des Ventils 18 in eine Anschlagsposition, da das Ventil 18 nicht normal regeln kann. Sobald dann durch die Pumpe 20 der Druck in der Systemleitung 19 und der Kupplungsdruck 16 auf das Zielniveau erhöht wird, braucht das Ventil 18 eine gewisse Zeit 31 (bedingt durch Trägheit, Reibung, etc.), um den Ventilschieber aus der Anschlagsposition wieder in eine Regelposition zu bringen. Damit wird in der Lamellenkupplung 1 zumindest vorübergehend nicht der gewünschte Kupplungsdruck 16, sondern der etwas höhere Druck der Systemleitung 19 eingestellt. Dieser höhere Druck der Systemleitung 19 ist höher als ein Soll-Kupplungsdruck, so dass eine Schließkraft 24 der Lamellenkupplung 1 höher ist als die Soll-Schließkraft 6 und ein höheres Drehmoment 30 als das Soll-Drehmoment 9 übertragen wird.

Um diesen Effekt zu verhindern, kann während der Füllphase ein geringerer Kupplungsdruck 16 vom Ventil 18 gefordert werden, als final gewünscht ist. Der geringere Kupplungsdruck 16 wird am Ventil 18 über einen Grenz-Ventilstrom 22 eingestellt, wobei der Grenz-Ventilstrom 22 kleiner ist als ein Soll-Ventilstrom 23.

Die Einstellung des Grenz-Ventilstroms 22 wird für eine kurze Zeit 31 aufrechterhalten. Erst danach (also zeitversetzt) wird die für die Übertragung des Soll-Drehmoments 9 erforderliche Soll-Schließkraft 6 durch Erhöhung des Ventilstroms 25 auf den Soll-Ventilstrom 23 eingestellt.

Sobald der reduzierte Kupplungsdruck 16 erreicht ist, begibt sich der Ventilschieber in die Regelposition. Sobald dies geschehen ist, wird der geforderte Kupplungsdruck 16 durch eine Regelung des Ventils 18 in dem Maß auf das Zielniveau (auf den Soll-Kupplungsdruck) erhöht, bei dem die Pumpe 20 noch in der Lage ist, den Druck in der Systemleitung 19 aufrecht zu erhalten. Somit können die Überschwinger im Kupplungsdruck 16 bzw. im übertragenen Drehmoment 30 verhindert werden.

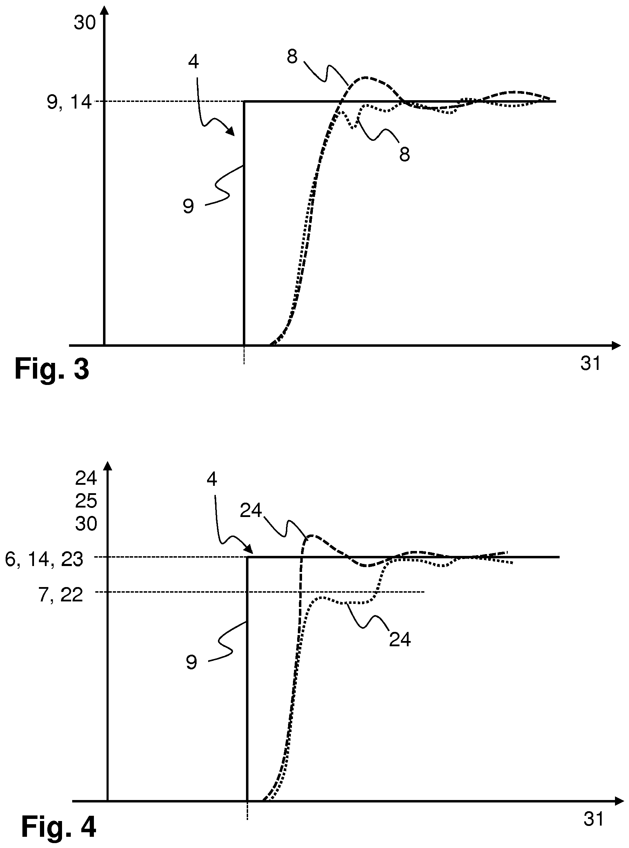

Fig. 3 zeigt ein Drehmoment - Zeit Diagramm. Fig. 4 zeigt ein Schließkraft/Ventilstrom/Drehmoment - Zeit Diagramm. Die beiden Diagramme werden im Folgenden gemeinsam beschrieben. Durch die Diagramme wird das vorgeschlagene Verfahren verdeutlicht.

Bei einer Drehmomentanforderung 4 und (vor bzw. während) einem daraufhin erfolgendem Schließen der Lamellenkupplung 1 werden die folgenden Schritte durchgeführt. In Schritt a) wird eine, in einer axialen Richtung 5 wirkende Soll-Schließkraft 6 der Lamellenkupplung 1 zur Übertragung eines Soll-Drehmoments 9 auf die Abtriebswelle 3 bestimmt. In Schritt b) erfolgt das Bestimmen und Einstellen einer Grenz-Schließkraft 7, die kleiner ist als die Soll-Schließkraft 6. In Schritt c) erfolgt das zeitversetzte Einstellen der Soll-Schließkraft 6. Durch die Begrenzung der Soll-Schließkraft 6 auf die Grenz-Schließkraft 7 wird eine Übertragung eines Ist-Drehmoments 8 realisiert, wobei ein bei dem Schließen der Lamellenkupplung 1 übertragenes maximales Ist-Drehmoment 8 ein zu übertragendes Soll-Drehmoment 9 um höchstens 5 % übersteigt.

Zur Übertragung eines vorgegebenen Soll-Drehmoments 9 wird üblicherweise eine Soll-Schließkraft 6 an der Lamellenkupplung 1 eingestellt, durch die die Lamellen 15 gegeneinander gepresst werden. Es hat sich nun gezeigt, dass gerade bei einem schnellen Aufbau eines Drehmoments 30 Überschwinger auftreten, die das zu übertragende Soll-Drehmoment 9 deutlich übersteigen. Zur Vermeidung bzw. Begrenzung dieser Überschwinger wird nun vorgeschlagen, dass die Schließkraft 24 nicht sofort auf die Soll-Schließkraft 6 erhöht wird, sondern zunächst nur auf eine Grenz-Schließkraft 7.

Die Einstellung der Grenz-Schließkraft 7 wird für ca. 0,02 bis 0,2 Sekunden aufrechterhalten. Erst danach (also zeitversetzt) wird die für die Übertragung des Soll-Drehmoments 9 erforderliche Soll-Schließkraft 6 eingestellt.

Erkennbar stellt die Drehmomentanforderung 4 eine sprunghafte Änderung eines Soll-Drehmoments 9 dar. Bei einer sprunghaften Änderung wird ein Soll-Drehmoment 9 innerhalb einer kurzen Zeit 31 auf einen wesentlich höheren Wert gesteigert, z. B. wird das Soll-Drehmoment 9 - wie hier dargestellt - impulsartig um einen bestimmten Wert gesteigert. Hier stellt das mit der Drehmomentanforderung 4 angeforderte Soll-Drehmoment 9 ein für die vorliegende Lamellenkupplung 1 definiertes Nenndrehmoment 14 dar.

Bei einer hydraulischen Aktuierung der Lamellenkupplung 1 wird die in der axialen Richtung 5 wirkende Schließkraft 24 durch einen Kupplungsdruck 16 in einem Kupplungsdruckraum 17 erzeugt wie oben im Zusammenhang mit Fig. 2 beschrieben. Bei einer Drehmomentanforderung 4 erfolgt eine Ansteuerung des Ventils 18 zunächst mit einem Grenz-Ventilstrom 22 zur Öffnung des Ventils 18, wobei der Ventilstrom 25 während des Schließens der Lamellenkupplung 1 dann bis zu einem Soll-Ventilstrom 23 erhöht wird.

Dabei werden die folgenden Schritte durchgeführt. In Schritt a) erfolgt ein Bestimmen einer, in einer axialen Richtung 5 wirkenden Soll-Schließkraft 6 der Lamellenkupplung 1 zur Übertragung eines Soll-Drehmoments 9 auf die Abtriebswelle 3 und ein Bestimmen eines Soll-Ventilstroms 23 zur Erzeugung der Soll-Schließkraft 6. In Schritt b) erfolgt das Bestimmen und Einstellen einer Grenz-Schließkraft 7, die kleiner ist als die Soll-Schließkraft 6, durch das Einstellen eines Grenz-Ventilstroms 22 zur Öffnung des Ventils 18. In Schritt c) erfolgt das zeitversetzte Einstellen der Soll-Schließkraft 6 durch Erhöhen des Ventilstroms 25 auf den Soll-Ventilstrom 23.

### Bezugszeichenliste

- 1: Lamellenkupplung
- 2: Antriebswelle
- 3: Abtriebswelle
- 4: Drehmomentanforderung
- 5: axiale Richtung
- 6: Soll-Schließkraft
- 7: Grenz-Schließkraft
- 8: Ist-Drehmoment
- 9: Soll-Drehmoment
- 10: Seitenwelle
- 11: Kraftfahrzeug
- 12: Rad
- 13: Antriebseinheit
- 14: Nenndrehmoment
- 15: Lamelle
- 16: Kupplungsdruck
- 17: Kupplungsdruckraum
- 18: Ventil
- 19: Systemleitung
- 20: Pumpe
- 21: Hydraulikfluid
- 22: Grenz-Ventilstrom
- 23: Soll-Ventilstrom
- 24: Schließkraft
- 25: Ventilstrom
- 26: Systemdruck
- 27: Getriebe
- 28: Drehachse
- 29: Steuerungseinheit
- 30: Drehmoment
- 31: Zeit

## Patentansprüche

1. Verfahren zum Ansteuern einer Lamellenkupplung (1), die zur schaltbaren Übertragung von Drehmomenten zwischen einer Antriebswelle (2) und einer Abtriebswelle (3) angeordnet ist, wobei bei einer Drehmomentanforderung (4) und einem daraufhin erfolgendem Schließen der Lamellenkupplung (1) zumindest die folgenden Schritte durchgeführt werden:
a) Bestimmen einer, in einer axialen Richtung (5) wirkenden Soll-Schließkraft (6) der Lamellenkupplung (1) zur Übertragung eines Soll-Drehmoments (9) auf die Abtriebswelle (3);
b) Bestimmen und Einstellen einer Grenz-Schließkraft (7), die kleiner ist als die Soll-Schließkraft (6) und
c) zeitversetztes Einstellen der Soll-Schließkraft (6);
wobei durch die Begrenzung der Soll-Schließkraft (6) auf die Grenz-Schließkraft (7) eine Übertragung eines Ist-Drehmoments (8) realisiert wird, so dass ein bei dem Schließen der Lamellenkupplung (1) übertragenes maximales Ist-Drehmoment (8) ein zu übertragendes Soll-Drehmoment (9) um höchstens 5 % übersteigt.

2. Verfahren nach Patentanspruch 1, wobei die Lamellenkupplung (1) zur Übertragung von Drehmomenten an einer Seitenwelle (10) eines Kraftfahrzeuges (11) angeordnet ist, so dass durch das Schließen der Lamellenkupplung (1) nur ein Rad (12) des Kraftfahrzeuges (11) mit einer Antriebseinheit (13) des Kraftfahrzeuges (11) drehmomentübertragend verbunden wird.

3. Verfahren nach einem der vorhergehenden Patentansprüche, wobei die Drehmomentanforderung (4) eine sprunghafte Änderung des Soll-Drehmoments (9) darstellt.

4. Verfahren nach einem der vorhergehenden Patentansprüche, wobei das mit der Drehmomentanforderung (4) angeforderte Soll-Drehmoment (9) ein für die vorliegende Lamellenkupplung (1) definiertes Nenndrehmoment (14) darstellt.

5. Verfahren nach einem der vorhergehenden Patentansprüche, wobei die Begrenzung auf eine Grenz-Schließkraft (7) während des Schließens der Lamellenkupplung (1) nach dem Übergang von einer zwischen den Lamellen (15) vorliegenden Haftreibungsbedingung auf eine Gleitreibungsbedingung aufgehoben wird.

6. Verfahren nach einem der vorhergehenden Patentansprüche, wobei die Lamellenkupplung (1) hydraulisch aktuiert wird, wobei die in der axialen Richtung (5) wirkende Schließkraft (24) durch einen Kupplungsdruck (16) in einem Kupplungsdruckraum (17) erzeugt wird, wobei der Kupplungsdruckraum (17) über ein Ventil (18) mit einer Systemleitung (19) verbunden ist, die über eine Pumpe (20) mit einem Hydraulikfluid (21) befüllbar ist; wobei bei einer Drehmomentanforderung (4) eine Ansteuerung des Ventils (18) zunächst mit einem Grenz-Ventilstrom (22) zur Öffnung des Ventils (18) erfolgt, wobei der Ventilstrom (25) während des Schließens der Lamellenkupplung (1) dann bis zu einem Soll-Ventilstrom (23) erhöht wird.

7. Verfahren nach Patentanspruch 6, wobei bei einer Drehmomentanforderung (4) und einem daraufhin erfolgendem Schließen der Lamellenkupplung (1) zumindest die folgenden Schritte durchgeführt werden:
a) Bestimmen einer, in einer axialen Richtung (5) wirkenden Soll-Schließkraft (6) der Lamellenkupplung (1) zur Übertragung eines Soll-Drehmoments (9) auf die Abtriebswelle (3) und Bestimmen des Soll-Ventilstroms (23) zur Erzeugung der Soll-Schließkraft (6);
b) Bestimmen und Einstellen einer Grenz-Schließkraft (7), die kleiner ist als die Soll-Schließkraft (6) durch das Einstellen des Grenz-Ventilstroms (22) zur Öffnung des Ventils (18), und
c) zeitversetztes Einstellen der Soll-Schließkraft (6) durch Erhöhen des Ventilstroms (25) auf den Soll-Ventilstrom (23).

8. Verfahren nach Patentanspruch 6 oder 7, wobei während des Schließens der Lamellenkupplung (1) durch das gesteuerte Öffnen des Ventils (18) sichergestellt wird, dass der Kupplungsdruck (16) einen Soll-Kupplungsdruck um höchstens 5 % übersteigt.

9. Kraftfahrzeug (11), zumindest aufweisend eine Antriebseinheit (13) und eine Lamellenkupplung (1), die zur Übertragung von Drehmomenten an einer Seitenwelle (10) des Kraftfahrzeuges (11) angeordnet ist, so dass durch das Schließen der Lamellenkupplung (1) nur ein Rad (12) des Kraftfahrzeuges (11) mit der Antriebseinheit (13) des Kraftfahrzeuges (11) drehmomentübertragend verbindbar ist, wobei die Lamellenkupplung (1) mit einem Verfahren nach einem der vorhergehenden Patentansprüche angesteuert wird.

## Claims

1. Method for controlling a multiplate clutch (1) situated between an input shaft (2) and an output shaft (3) for the switchable transmission of torques, wherein in the event of a torque request (4) and a subsequent engagement of the multiplate clutch (1), at least the following steps are carried out:
a) determining a setpoint engagement force (6), acting in an axial direction (5), of the multiplate clutch (1) for transmitting a setpoint torque (9) to the output shaft (3);
b) determining and setting a limiting engagement force (7) that is less than the setpoint engagement force (6), and
c) setting the setpoint engagement force (6) in a time-delayed manner;
wherein a transmission of an actual torque (8) is achieved by limiting the setpoint engagement force (6) to the limiting engagement force (7), so that a maximum actual torque (8) that is transmitted upon engagement of the multiplate clutch (1) exceeds a setpoint torque (9) to be transmitted by at most 5%.

2. Method according to Claim 1, wherein for transmitting torques the multiplate clutch (1) is situated on a side shaft (10) of a motor vehicle (11), so that as the result of engaging the multiplate clutch (1), only one wheel (12) of the motor vehicle (11) is connected to a drive unit (13) of the motor vehicle (11) in a torque-transmitting manner.

3. Method according to one of the preceding claims, wherein the torque request (4) represents an abrupt change in the setpoint torque (9).

4. Method according to one of the preceding claims, wherein the setpoint torque (9) that is requested via the torque request (4) represents a nominal torque (14) that is defined for the present multiplate clutch (1).

5. Method according to one of the preceding claims, wherein the limitation to a limiting engagement force (7) during the engagement of the multiplate clutch (1) is eliminated after the transition from a static friction condition, present between the plates (15), to a sliding friction condition.

6. Method according to one of the preceding claims, wherein the multiplate clutch (1) is hydraulically actuated, wherein the engagement force (24) that acts in the axial direction (5) is generated by a clutch pressure (16) in a clutch pressure chamber (17), the clutch pressure chamber (17) being connected via a valve (18) to a system line (19) that is fillable with a hydraulic fluid (21) by means of a pump (20), and when there is a torque request (4), the valve (18) is initially controlled with a limiting valve current (22) for opening the valve (18), wherein during the engagement of the multiplate clutch (1) the valve current (25) is then increased to a setpoint valve current (23).

7. Method according to Claim 6, wherein in the event of a torque request (4) and a subsequent engagement of the multiplate clutch (1), at least the following steps are carried out:
a) determining a setpoint engagement force (6), acting in an axial direction (5), of the multiplate clutch (1) for transmitting a setpoint torque (9) to the output shaft (3), and determining the setpoint valve current (23) for generating the setpoint engagement force (6);
b) determining and setting a limiting engagement force (7) that is less than the setpoint engagement force (6), by setting the limiting valve current (22) for opening the valve (18), and
c) setting the setpoint engagement force (6) in a time-delayed manner by increasing the valve current (25) to the setpoint valve current (23).

8. Method according to Claim 6 or 7, wherein during the engagement of the multiplate clutch (1), the controlled opening of the valve (18) ensures that the clutch pressure (16) exceeds a setpoint clutch pressure by at most 5%.

9. Motor vehicle (11) at least comprising a drive unit (13) and a multiplate clutch (1), which for transmitting torques is situated on a side shaft (10) of the motor vehicle (11), so that as the result of engaging the multiplate clutch (1), only one wheel (12) of the motor vehicle (11) is connectable to the drive unit (13) of the motor vehicle (11) in a torque-transmitting manner, wherein the multiplate clutch (1) is controlled with a method according to one of the preceding claims.

## Revendications

1. Procédé pour commander un embrayage multidisque (1), qui est agencé pour la transmission commutable de couples entre un arbre d'entraînement (2) et un arbre entraîné (3), selon lequel, en présence d'une demande de couple (4) et d'une fermeture de l'embrayage multidisque (1) ayant lieu à la suite, au moins les étapes suivantes sont réalisées :
a) la détermination d'une force de fermeture de consigne (6) de l'embrayage multidisque (1), agissant dans une direction axiale (5), pour la transmission d'un couple de consigne (9) à l'arbre entraîné (3) ;
b) la détermination et l'ajustement d'une force de fermeture limite (7), qui est inférieure à la force de fermeture de consigne (6), et
c) l'ajustement décalé dans le temps de la force de fermeture de consigne (6) ;
la limitation de la force de fermeture de consigne (6) à la force de fermeture limite (7) permettant de réaliser une transmission d'un couple réel (8), de telle sorte qu'un couple réel maximal (8) transmis lors de la fermeture de l'embrayage multidisque (1) dépasse d'au plus 5 % un couple de consigne (9) à transmettre.

2. Procédé selon la revendication 1, dans lequel l'embrayage multidisque (1) pour la transmission de couples est agencé sur un arbre latéral (10) d'un véhicule automobile (11), de telle sorte qu'uniquement une roue (12) du véhicule automobile (11) soit reliée d'une manière transmettant un couple avec une unité d'entraînement (13) du véhicule automobile (11) par la fermeture de l'embrayage multidisque (1).

3. Procédé selon l'une quelconque des revendications précédentes, dans lequel la demande de couple (4) représente une modification soudaine du couple de consigne (9).

4. Procédé selon l'une quelconque des revendications précédentes, dans lequel le couple de consigne (9) demandé avec la demande de couple (4) représente un couple nominal (14) défini pour l'embrayage multidisque présent (1).

5. Procédé selon l'une quelconque des revendications précédentes, dans lequel la limitation à une force de fermeture limite (7) pendant la fermeture de l'embrayage multidisque (1) est levée après la transition d'une condition de frottement statique présente entre les disques (15) à une condition de frottement dynamique.

6. Procédé selon l'une quelconque des revendications précédentes, dans lequel l'embrayage multidisque (1) est actionné hydrauliquement, la force de fermeture (24) agissant dans la direction axiale (5) étant générée par une pression d'embrayage (16) dans une chambre de pression d'embrayage (17), la chambre de pression d'embrayage (17) étant reliée par l'intermédiaire d'une soupape (18) avec une conduite de système (19), qui peut être remplie par l'intermédiaire d'une pompe (20) avec un fluide hydraulique (21); en présence d'une demande de couple (4), une commande de la soupape (18) ayant lieu tout d'abord avec un courant de soupape limite (22) pour l'ouverture de la soupape (18), le courant de soupape (25) étant ensuite augmenté jusqu'à un courant de soupape de consigne (23) pendant la fermeture de l'embrayage multidisque (1).)

7. Procédé selon la revendication 6, dans lequel, en présence d'une demande de couple (4) et d'une fermeture de l'embrayage multidisque (1) ayant lieu à la suite, au moins les étapes suivantes sont réalisées :
a) la détermination d'une force de fermeture de consigne (6) de l'embrayage multidisque (1), agissant dans une direction axiale (5), pour la transmission d'un couple de consigne (9) à l'arbre entraîné (3), et la détermination du courant de soupape de consigne (23) pour la génération de la force de fermeture de consigne (6) ;
b) la détermination et l'ajustement d'une force de fermeture limite (7), qui est inférieure à la force de fermeture de consigne (6) par l'ajustement du courant de soupape limite (22) pour l'ouverture de la soupape (18), et
c) l'ajustement décalé dans le temps de la force de fermeture de consigne (6) par augmentation du courant de soupape (25) au courant de soupape de consigne (23).

8. Procédé selon la revendication 6 ou 7, dans lequel, pendant la fermeture de l'embrayage multidisque (1), l'ouverture commandée de la soupape (18) assure que la pression d'embrayage (16) dépasse d'au plus 5 % une pression d'embrayage de consigne.

9. Véhicule automobile (11), comprenant au moins une unité d'entraînement (13) et un embrayage multidisque (1), qui est agencé pour la transmission de couples sur un arbre latéral (10) du véhicule automobile (11), de telle sorte qu'uniquement une roue (12) du véhicule automobile (11) puisse être reliée d'une manière transmettant un couple avec l'unité d'entraînement (13) du véhicule automobile (11) par la fermeture de l'embrayage multidisque (1), l'embrayage multidisque (1) étant commandé avec un procédé selon l'une quelconque des revendications précédentes.
